# EUROPEAN PATENT APPLICATION

(11) **EP 4 451 786 A1**
(43) Date of publication of application: **23.10.2024**
(21) Application number: 21967787.9
(22) Date of filing: 17.12.2021
(51) Int. Cl.: H04W 76/14, H04W 76/28, H04W 76/23

(54) **METHOD AND DEVICE FOR DETERMINING SIDELINK DISCONTINUOUS RECEPTION CONFIGURATION**

(71) Applicant: Beijing Xiaomi Mobile Software Co., Ltd., Beijing 100085 (CN)
(72) Inventor: YANG, Xing, Beijing 100085 (CN)
(74) Representative: Zimmermann, Tankred Klaus
(86) International application number: PCT/CN2021/139334
(87) International publication number: WO 2023/108655

(57) **Abstract**

A method and device for determining a sidelink (SL) discontinuous reception (DRX) configuration, which can be applied to systems of Internet of Vehicles, V2X, V2V and the like. The method comprises: in response to a received serving cell message, determining an SL DRX configuration mode. Which SL DRX configuration mode is used can be determined according to the serving cell message; direct communication between user equipment can be ensured; and moreover, equipment power consumption of the user equipment during direct communication can be saved, and resource waste is avoided.

## Description

### TECHNICAL FIELD

The present disclosure relates to the field of communication technologies, and particularly to a method and a device for determining a sidelink discontinuous reception configuration.

### BACKGROUND

In related arts, user equipments can communicate with each other through a sidelink (SL). The sidelink may include a physical sidelink control channel (PSCCH) and a physical sidelink share channel (PSSCH). Sidelink control information (SCI) in the PSCCH may indicate information necessary for receiving the PSSCH, such as, a PSSCH channel resource and a transmission parameter, etc. The PSSCH is used to carry data for sidelink communication.

In order to save a device power consumption of the user equipment during the sidelink communication, sidelink discontinuous reception (DRX) is introduced. A reception user equipment monitors a PSCCH channel only within an activation time period, so as to achieve a purpose of saving energy. A sending user equipment sends sidelink data only within the activation time period of the reception user equipment to avoid data loss.

### SUMMARY

Embodiments of the present disclosure provides a method and a device for determining a sidelink discontinuous reception configuration, which may be applied to Internet of Vehicles, such as vehicle to everything (V2X) communication, long term evolution-vehicle (LTE-V) communication, vehicle-to-vehicle (V2V) communication, etc., or may be applied to intelligent driving, intelligent networked vehicles and other fields. With determining the sidelink discontinuous reception configuration, sidelink communication between user equipments can be guaranteed, and a device power consumption of the user equipment during the sidelink communication may also be saved, and waste of resources may be avoided.

In a first aspect, a method for determining a sidelink discontinuous reception configuration is provided according to embodiments of the present disclosure, and is performed by a user equipment. The method includes:
determining a sidelink discontinuous reception (SL DRX) configuration mode in response to a received serving cell message.

In this technical solution, with determining which SL DRX configuration mode to adopt according to the serving cell message, sidelink communication between the user equipment and the user equipment can be guaranteed, and a device power consumption of the user equipment during the sidelink communication may also be saved, and waste of resources may be avoided.

In an implementation, the method further includes:
determining to adopt a first SL DRX configuration mode in response to an SL DRX indicator being present in the serving cell message; or
determining to adopt a second SL DRX configuration mode in response to an SL DRX indicator being absent in the serving cell message.

In a possible implementation, the SL DRX indicator being absent in the serving cell message includes that:
a serving cell does not provide system information carrying SL DRX configuration; or
SL DRX configuration is absent in system information carrying sidelink configuration and sent by the serving cell.

In a possible implementation, the SL DRX indicator includes any one of:
an indicator of the SL DRX configuration for broadcast and multicast;
an indicator of configuration for SL DRX; or
an indicator of supporting a Sidelink DRX mechanism.

In an implementation, the method further includes: reporting received assistance information sent by a peer user equipment in response to the user equipment being in a connected state and adopting the first SL DRX configuration mode.

In an implementation, the method further includes: reporting a received SL DRX configuration sent by a peer user equipment in response to the user equipment being in a connected state and adopting the first SL DRX configuration mode, and accepting the received SL DRX configuration sent by the peer user equipment.

In an implementation, the method further includes: not reporting received assistance information and/or SL DRX configuration sent by a peer user equipment in response to the user equipment being in a connected state and adopting the second SL DRX configuration mode.

In an implementation, the method further includes: not sending SL DRX configuration to a peer user equipment in response to the user equipment being in a connected state and adopting the second SL DRX configuration mode, and a Sidelink transmission mode between the user equipment and the peer user equipment being unicast.

In an implementation, the method further includes: determining the SL DRX configuration and sending the determined SL DRX configuration to a peer user equipment in response to the user equipment being in a connected state and adopting the second SL DRX configuration mode, and a Sidelink transmission mode between the user equipment and the peer user equipment being unicast, and a sending resource of the user equipment adopting a self-selection mode.

In an implementation, the method further includes: not sending SL DRX configuration to a peer user equipment in response to the user equipment being in a connected state and adopting the second SL DRX configuration mode, and a Sidelink transmission mode between the user equipment and the peer user equipment being unicast, and a sending resource of the user equipment adopting a dynamic scheduling mode.

In an implementation, the method further includes: determining the SL DRX configuration and sending the SL DRX configuration to a peer user equipment in response to the user equipment being in an idle or inactive state, and adopting the second SL DRX configuration mode, and a Sidelink transmission mode between the user equipment and the peer user equipment being unicast.

In an implementation, the method further includes: not sending SL DRX configuration to a peer user equipment in response to the user equipment being in an idle or inactive state, and adopting the second SL DRX configuration mode, and a Sidelink transmission mode between the user equipment and the peer user equipment being unicast.

In an implementation, the method further includes: releasing configured unicast SL DRX in response to the user equipment being in an idle or inactive state, and moving from a serving cell adopting the first SL DRX configuration mode to a serving cell adopting the second SL DRX configuration mode, and having been configured with the unicast SL DRX.

In an implementation, the method further includes: releasing configured unicast SL DRX in response to the user equipment moving from an offline state to a serving cell adopting the second SL DRX configuration mode, and having been configured with the unicast SL DRX.

In an implementation, the method further includes: rejecting a received SL DRX configuration, and sending a rejection indicator to a peer user equipment in response to adopting the second SL DRX configuration mode, and a Sidelink transmission mode between the user equipment and the peer user equipment being unicast.

In an implementation, the method further includes: determining acceptance or rejection of a received SL DRX configuration, and sending an acceptance indicator or a rejection indicator to a peer user equipment in response to adopting the second SL DRX configuration mode, and a Sidelink transmission mode between the user equipment and the peer user equipment being unicast.

In an implementation, the method further includes: adopting a pre-configured SL DRX configuration in response to adopting the second SL DRX configuration mode, and a Sidelink transmission mode between the user equipment and a peer user equipment being broadcast or multicast.

In an implementation, the method further includes: not using SL DRX in response to adopting the second SL DRX configuration mode and a Sidelink transmission mode between the user equipment and a peer user equipment being broadcast or multicast.

In a possible implementation, the method further includes: not using SL DRX comprises a DRX function being not started during receiving Sidelink transmission.

In a second aspect, a method for determining a sidelink discontinuous reception configuration is provided according to embodiments of the present disclosure, and is performed by a serving cell device. The method includes:
sending a serving cell message to a user equipment, an SL DRX indicator being present in the serving cell message, or an SL DRX indicator being absent in the serving cell message;
in which the SL DRX indicator being absent in the serving cell message includes that:
   a serving cell does not provide system information carrying SL DRX configuration; or
   SL DRX configuration is absent in system information carrying sidelink configuration and sent by the serving cell.

In a third aspect, a communication device is provided according to embodiments of the present disclosure. The communication device has part of or all functions of the smart repeater for implementing the method as described in the first aspect. For example, the functions of the communication device may possess functions in part of or all of embodiments in the disclosure or may possess functions of any one embodiment in the disclosure independently. The functions may be implemented by hardware, or by executing corresponding software by hardware. The software or hardware includes one or more units or modules corresponding to the above functions.

In an implementation, a structure of the communication device may include a transceiver module and a processing module, and the processing module is configured to support the communication device to perform corresponding functions in the foregoing method. The transceiver module is configured to support communication between the communication device and other devices. The communication device may further include a storage module, which is configured to be coupled with the transceiver module and the processing module, and stores necessary computer programs and data of the communication device.

As an example, the processing module may be a processor, the transceiver module may be a transceiver or a communication interface, and the storage module may be a memory.

In a fourth aspect, another communication device is provided according to embodiments of the present disclosure. The communication device has part of or all functions of the network device for implementing the method example as described in the second aspect. For example, the functions of the communication device may possess functions in part of or all embodiments in the disclosure or may possess functions of any one embodiment in the disclosure independently. The functions may be implemented by hardware, or by executing corresponding software by hardware. The software or hardware includes one or more units or modules corresponding to the above functions.

In an implementation, a structure of the communication device may include a transceiver module and a processing module, and the processing module is configured to support the communication device to perform corresponding functions in the foregoing method. The transceiver module is configured to support communication between the communication device and other devices. The communication device may further include a storage module, which is configured to be coupled with the transceiver module and the processing module, and stores necessary computer programs and data of the communication device.

As an example, the processing module may be a processor, the transceiver module may be a transceiver or a communication interface, and the storage module may be a memory.

In a fifth aspect, a communication device including a processor is provided according to embodiments of the disclosure. When the processor calls a computer program in a memory, the method according to the first aspect is performed.

In a sixth aspect, a communication device including a processor is provided according to embodiments of the disclosure. When the processor calls a computer program in a memory, the method according to the second aspect is performed.

In a seventh aspect, a communication device including a processor and a memory storing a computer program is provided according to embodiments of the disclosure. The processor is configured to execute the computer program stored on the memory, causing the communication device to perform the method according to the first aspect.

In an eighth aspect, a communication device including a processor and a memory storing a computer program is provided according to embodiments of the disclosure. The processor is configured to execute the computer program stored on the memory, causing the communication device to perform the method according to the second aspect.

In a ninth aspect, a communication device is provided according to embodiments of the disclosure. The communication device includes a processor and an interface circuit. The interface circuit is configured to receive code instructions and transmit the code instructions to the processor; and the processor is configured to run the code instructions so that the device performs the method according to the above first aspect.

In a tenth aspect, a communication device is provided according to embodiments of the disclosure. The communication device includes a processor and an interface circuit. The interface circuit is configured to receive code instructions and transmit the code instructions to the processor; and the processor is configured to run the code instructions so that the device performs the method according to the above second aspect.

In an eleventh aspect, a communication system is provided according to embodiments of the disclosure. The system includes the communication device according to the third aspect and the communication device according to the fourth aspect, or the system includes the communication device according to the fifth aspect and the communication device according to the sixth aspect, or the system includes the communication device according to the seventh aspect and the communication device according to the eighth aspect, or the system includes the communication device according to the ninth aspect and the communication device according to the tenth aspect.

In a twelfth aspect, a computer-readable storage medium is provided according to embodiments of the present disclosure. The computer-readable storage medium is configured to store instructions used for a terminal device. When the instructions are executed, the method as described in the first aspect is implemented by the terminal device.

In a thirteenth aspect, a computer-readable storage medium is provided according to embodiments of the present disclosure. The computer-readable storage medium is configured to store instructions used for a network device. When the instructions are executed, the method as described in the second aspect is implemented by the network device.

In a fourteenth aspect, a computer program product including a computer program is further provided in the present disclosure. The computer program runs on a computer, causing the computer to perform the method according to the first aspect.

In a fifteenth aspect, a computer program product including a computer program is further provided in the present disclosure. The computer program runs on a computer, causing the computer to perform the method according to the second aspect.

In a sixteenth aspect, a computer program is provided in the present disclosure. The computer program runs on a computer, causing the computer to perform the method according to the first aspect.

In a seventeenth aspect, a computer program is provided in the present disclosure. The computer program runs on a computer, causing the computer to perform the method according to the second aspect.

### BRIEF DESCRIPTION OF THE DRAWINGS

In order to explain embodiments of the disclosure or technical solutions in the related art more clearly, the drawings described in the embodiments of the disclosure or required in the related art will be briefly introduced below.
FIG. 1 is a flowchart illustrating a method for determining a sidelink discontinuous reception configuration according to an embodiment of the present disclosure.
FIG. 2 is a flowchart illustrating another method for determining a sidelink discontinuous reception configuration according to an embodiment of the present disclosure.
FIG. 3 is a flowchart illustrating yet another method for determining a sidelink discontinuous reception configuration according to an embodiment of the present disclosure.
FIG. 4 is a flowchart illustrating yet another method for determining a sidelink discontinuous reception configuration according to an embodiment of the present disclosure.
FIG. 5 is a structural diagram illustrating a communication device according to an embodiment of the present disclosure.
FIG. 6 is a structural diagram illustrating another communication device according to an embodiment of the present disclosure.

### DETAILED DESCRIPTION

Embodiments of the present disclosure are described in detail below, examples of which are shown in the accompanying drawings, wherein the same or similar reference numerals represent the same or similar elements or elements having the same or similar functions throughout. The embodiments described below by referring to the drawings are illustrative, and are intended to explain the present disclosure, and cannot be understood as a limitation on the present disclosure. In description of the present disclosure, unless otherwise specified, the character "/" represents a kind of "or" relationship, for example, A/B may represent A or B. The character "and/or" describes an association relationship of association objects, indicating that there may exist three relationships, for example, A and/or B, may represent: any of existing A only, existing both A and B, or existing B only.

Terms used herein in embodiments of the present disclosure are only for the purpose of describing specific embodiments, but should not be construed to limit the present disclosure. As used in the embodiments of the present disclosure and the appended claims, "a/an" and "the" in singular forms are intended to include plural forms, unless clearly indicated in the context otherwise.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if' may be construed to mean "when" or "upon" or "in response to determining" depending on the context.

Embodiments of the present disclosure are described in detail below, examples of which are illustrated in the accompanying drawings. The same or similar reference numerals represent the same or similar elements throughout the descriptions. The embodiments described below with reference to the accompanying drawings are illustrative, are intended to explain the present disclosure and cannot be construed as limiting the present disclosure.

In order to support sidelink communication between user equipments, a sidelink communication mode is introduced, and an interface between the user equipments is a PC-5 (sidelink communication) interface. According to a corresponding relationship between a sending user equipment and a reception user equipment, the sidelink supports three transmission modes, such as unicast, multicast and broadcast.

When user equipments in a connected state is in the sidelink communication, it is required to send a SidelinkUEInformation (sidelink communication terminal information) message to a serving cell device (such as a base station), which includes Sidelink sending resource request information. This information is a list, each element in the list denotes Sidelink sending characteristic of a target user equipment, including a Sidelink identifier of the target user equipment, a corresponding transmission mode (including unicast, multicast and broadcast), a QoS (quality of service), and a target transmitting frequency.

There are two sending resource allocation modes for the sidelink communication, one is a network dynamic scheduling mode, and the other one is a user equipment self-selection mode in a resource pool broadcast by the network. The dynamic scheduling means that a network dynamically allocates the sending resource on the sidelink to the user equipment according to cached data reported by the user equipment, and the self-selection means that the user equipment randomly selects the sending resource on its own from a resource pool broadcast by the network or a pre-configured resource pool. The resource pool of the dynamic scheduling mode and the resource pool of the self-selection mode are separated, and the dynamic scheduling is uniformly allocated by the base station. Therefore, a reasonable algorithm can be used to avoid collisions between different user equipments.

The base station carries a configuration for Sidelink by broadcasting a message SIB 12. The user equipment determines whether the base station supports communication of the user equipment according to whether the base station supports SIB 12.

On a Uu interface, in order to save power consumption of the user equipment, the network device may configure discontinuous reception (DRX) for the user equipment. For this purpose, Sidelink DRX is introduced in R17 version. The reception user equipment monitors a PSCCH (physical sidelink control channel) channel only during an activation time, so as to achieve the purpose of saving energy. The sending user equipment sends Sidelink data only within the activation time of the reception user equipment to avoid data loss. The activation time includes a running period of a wake-up timer, an inactive timer and a retransmission timer.

For broadcast and multicast, a cycle of the Sidelink DRX, the wake-up timer, and the inactive timer are determined according to the QoS, and the corresponding relationship may be obtained through pre-configuration or base station broadcast.

The unicast SL DRX is sent by the sending user equipment to the reception user equipment, and the reception user equipment may send assistance information to the sending user equipment, and the assistance information includes suggested SL DRX configuration.

When the sending user equipment is in an offline or disconnected state, the SL DRX configuration is determined by the sending user equipment. When the sending user equipment is in a connected state, the SL DRX configuration is determined by the base station of the sending user equipment. The SL DRX configuration is sent to the sending user equipment through a RRC (radio resource control) message, and then the sending user equipment forwards the SL DRX configuration to the reception user equipment.

In a case where the reception user equipment is in the connected state, the reception user equipment reports a received SL DRX configuration to the base station. The base station may adjust Uu (cellular network communication interface) DRX, such that the SL DRX and the Uu DRX overlap as much as possible to achieve a purpose of saving power.

In a case wherein the sending user equipment is in the connected state, the sending user equipment may report received assistance information to the base station. The base station determines the SL DRX configuration according to the assistance information.

However, the base station may support sidelink, but does not support sidelink DRX. How to ensure sidelink communication between user equipments has become an urgent problem to be solved.

Based on the above problem, the present disclosure provides a method and a device for determining a sidelink discontinuous reception configuration, which may be applied to Internet of Vehicles, such as vehicle to everything (V2X) communication, long term evolution-vehicle (LTE-V) communication, vehicle-to-vehicle (V2V) communication, etc., or may be applied to intelligent driving, intelligent networked vehicles and other fields, and may be used for a case where a user equipment is under a coverage of a serving cell that supports sidelink but does not support sidelink DRX. With determining the sidelink discontinuous reception configuration, sidelink communication between the user equipments can be guaranteed, and a device power consumption of the user equipment during the sidelink communication may also be saved, and waste of resources may be avoided.

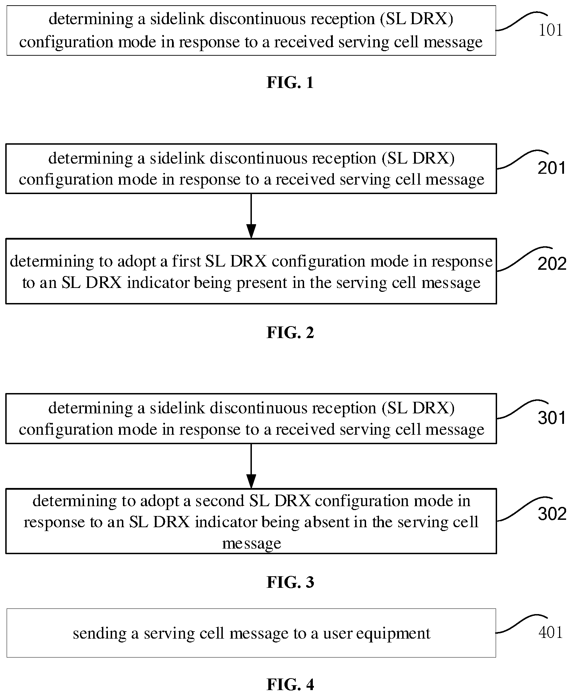

FIG. 1 is a flowchart illustrating a method for determining a sidelink discontinuous reception configuration according to an embodiment of the present disclosure. The method for determining the sidelink discontinuous reception configuration may be performed by a user equipment.

The user equipment in embodiments of the present disclosure is an entity for receiving or transmitting a signal at a user side, and for example, a mobile phone. The user equipment may be referred to as a terminal, a user equipment (UE), a mobile station (MS), a mobile terminal (MT), etc. The user equipment may be an automobile with a communication function, a smart automobile, a mobile phone, a wearable device, a tablet computer (Pad), a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart city, a wireless terminal device in a smart home, etc. A specific technology and a specific device form adopted by the user equipment are not limited in embodiments of the present disclosure.

As illustrated in FIG. 1, the method for determining the sidelink discontinuous reception configuration may include, but is not limited to, following step.

At step 101, a sidelink discontinuous reception (SL DRX) configuration mode is determined in response to a received serving cell message.

In an embodiment of the present disclosure, a serving cell supports a Sidelink mechanism, but may not support a Sidelink DRX (also called SL DRX) mechanism. When the user equipment is under a coverage of a serving cell that supports Sidelink but does not support SL DRX, the user equipment may determine which SL DRX configuration mode to adopt based on the received serving cell message, that is, the user equipment is required to determine a user equipment behavior.

In an implementation, it may be determined whether the serving cell of the user equipment supports the SL DRX configuration according to whether the serving cell message sent by the serving cell carries an SL DRX indicator. For example, the SL DRX indicator is present in the serving cell message sent by the serving cell, and it is determined that the serving cell of the user equipment supports the SL DRX configuration, that is, a first SL DRX configuration mode is adopted. For another example, the serving cell message sent by the serving cell does not carry the SL DRX indicator, it is determined that the serving cell of the user equipment does not support the SL DRX configuration, that is, a second SL DRX configuration mode is adopted.

In an optional implementation, the SL DRX indicator may include an indicator of the SL DRX configuration for broadcast and multicast, an indicator of configuration for the SL DRX, or an indicator of supporting the Sidelink DRX.

In an embodiment of the present disclosure, the serving cell message may be a system message, or may also be an RRC reconfiguration message. In an implementation, the system message sent by the serving cell does not carry the indicator, that is, it is determined that the serving cell does not support the Sidelink DRX, including that the serving cell does not support a system message SIB 12, or the serving cell supports the SIB 12 but the user equipment obtains the SIB 12 and then finds that the SIB 12 does not carry the SL DRX configuration for broadcast and multicast or the configuration for the SL DRX, the user equipment is required to determine which SL DRX configuration mode to adopt, that is, determine a behavior of the user equipment.

By implementing an embodiment of the present disclosure, with determining which SL DRX configuration mode to adopt according to the serving cell message, sidelink communication between user equipments can be guaranteed, and a device power consumption of the user equipment during the sidelink communication may also be saved, and waste of resources may be avoided.

It should be noted that, in some embodiments of the present disclosure, it may be determined whether the serving cell of the user equipment supports the SL DRX configuration based on whether the serving cell message sent by the serving cell carries the SL DRX indicator. FIG. 2 is a flowchart of another method for determining a sidelink discontinuous reception configuration according to an embodiment of the present disclosure. The method for determining a sidelink discontinuous reception configuration may be performed by a user equipment. As illustrated in FIG. 2, the method for determining the sidelink discontinuous reception configuration may include, but is not limited to, following steps.

At step 201, a sidelink discontinuous reception (SL DRX) configuration mode is determined in response to a received serving cell message.

In an embodiment of the present disclosure, the step 201 may be implemented in any one of respective embodiments of the present disclosure, which is not limited in embodiments of the present disclosure, and will not be repeated herein.

At step 202, it is determined to adopt a first SL DRX configuration mode in response to an SL DRX indicator being present in the serving cell message.

Optionally, when determining that the serving cell message carries the SL DRX indicator, it is determined that the serving cell of the user equipment supports the SL DRX configuration, and the first SL DRX configuration mode may be adopted.

In an embodiment of the present disclosure, the SL DRX indicator includes any one of following items 1) to 3):
1) an indicator of the SL DRX configuration for broadcast and multicast;
2) an indicator of configuration for SL DRX; or
3) an indicator of supporting a Sidelink DRX mechanism.

In an embodiment of the present disclosure, the serving cell message may be understood as that the serving cell supports carrying system information for SL DRX configuration. For example, the user equipment receives the message that the serving cell supports carrying the system information for SL DRX configuration, the user equipment may determine that the serving cell supports the SL DRX configuration, and adopt the first SL DRX configuration mode. For another example, the serving cell message sent by the serving cell received by the user equipment carries the indicator of the SL DRX configuration for broadcast or multicast, and the user equipment may determine to adopt the first SL DRX configuration mode. For another example, the serving cell message sent by the serving cell received by the user equipment carries the indicator of supporting the Sidelink DRX mechanism, and the user equipment may determine to adopt the first SL DRX configuration mode.

By implementing an embodiment of the present disclosure, the SL DRX configuration mode may be determined based on the serving cell message sent by the serving cell, and then the behavior of the user equipment may be determined based on the SL DRX configuration mode. Therefore, sidelink communication between user equipments can be guaranteed, and a device power consumption of the user equipment during the sidelink communication may also be saved, and waste of resources may be avoided.

In some embodiments of the present disclosure, as illustrated in FIG. 3, the method for determining the sidelink discontinuous reception configuration may include, but is not limited to, following steps.

At step 301, a sidelink discontinuous reception (SL DRX) configuration mode is determined in response to a received serving cell message.

In an embodiment of the present disclosure, the step 301 may be implemented in any one of respective embodiments of the present disclosure, which is not limited in embodiments of the present disclosure, and will not be repeated herein.

At step 302, it is determined to adopt a second SL DRX configuration mode in response to an SL DRX indicator being absent in the serving cell message.

Optionally, when determining that the serving cell message sent by the serving cell does not carry the SL DRX indicator, the user equipment may determine that the serving cell does not support the SL DRX configuration, that is, the second SL DRX configuration mode may be adopted.

The second SL DRX configuration mode is different from the first SL DRX configuration mode. The second SL DRX configuration mode may be understood as an SL DRX configuration mode adopted by the user equipment in a case where the serving cell does not support the Sidelink DRX mechanism.

In an embodiment of the present disclosure, the SL DRX indicator being absent in the serving cell message may include that: a serving cell does not provide system information carrying SL DRX configuration; or SL DRX configuration is absent in system information carrying sidelink configuration and sent by the serving cell. For example, the serving cell message sent by the serving cell received by the user equipment is that the serving cell does not provide the system information carrying SL DRX configuration, then the user equipment may determine that the serving cell does not support SL DRX configuration, and may determine to adopt the second SL DRX configuration mode. For another example, the serving cell message sent by the serving cell received by the user equipment is the system information carrying the sidelink configuration, but the system message does not carry the SL DRX configuration, then the user equipment may determine that the serving cell does not support the SL DRX configuration, and may determine to adopt the second SL DRX configuration mode. That is, the serving cell message sent by the serving cell is that the serving cell does not provide the system information (such as SIB12) carrying SL DRX configuration, or the serving cell message sent by the serving cell may be the system information (such as SIB 12) carrying the sidelink configuration, but the user equipment finds that the system information does not carry the SL DRX configuration after obtaining the system information (such as SIB 12), then the user equipment may determine that the serving cell does not support the SL DRX configuration, and may determine to adopt the second SL DRX configuration mode to determine the behavior of the user equipment.

In an implementation, the configuration for the SL DRX includes any one of following items 1) to 3):
1) an indicator of the SL DRX configuration for broadcast and multicast;
2) an indicator of configuration for SL DRX; or
3) an indicator of supporting a Sidelink DRX mechanism.

For example, whether the serving cell supports the SL DRX configuration or not may be determined according to whether the serving cell message sent by the serving cell carries the SL DRX indicator. For example, taking the SL DRX indicator being the indication of the SL DRX configuration for broadcast and multicast as an example, the serving cell message sent by the serving cell carries the indication of the SL DRX configuration for broadcast and multicast, it may be determined that the serving cell supports the SL DRX configuration, and the user equipment may determine to adopt the first SL DRX configuration mode. The serving cell message sent by the serving cell does not carry the indication of the SL DRX configuration for broadcast and multicast, it may be determined that the serving cell does not support the SL DRX configuration, and the user equipment may determine to adopt the second SL DRX configuration mode. As another example, taking the SL DRX indicator being the indicator for SL DRX configuration as an example, if the message sent by the serving cell carries the indication of the configuration for SL DRX, it may be determined that the serving cell supports the SL DRX configuration, and the user equipment may determine to adopt the first SL DRX configuration mode. The message sent by the serving cell does not carry the indication of the configuration for SL DRX, it may be determined that the serving cell does not support the SL DRX configuration, and the user equipment may determine to adopt the second SL DRX configuration mode. For another example, taking the SL DRX indicator being the indicator of supporting the Sidelink DRX mechanism as an example, the message sent by the serving cell carries the indication of supporting the Sidelink DRX mechanism, it may be determined that the serving cell supports the SL DRX configuration, and the user equipment may determine to adopt the first SL DRX configuration mode. The message sent by the serving cell does not carry the indicator of supporting the Sidelink DRX mechanism, it may be determined that the serving cell does not support the SL DRX configuration, and the user equipment may determine to adopt the second SL DRX configuration mode.

By implementing an embodiment of the present disclosure, the SL DRX configuration mode may be determined based on the serving cell message sent by the serving cell, and then the behavior of the user equipment may be determined based on the SL DRX configuration mode. Therefore, sidelink communication between user equipments can be guaranteed, and a device power consumption of the user equipment during the sidelink communication may also be saved, and waste of resources may be avoided.

It should be noted that whether the SL DRX configuration is determined by the user equipment or by the serving cell is related to a current connection state of the user equipment. For example, when a sending UE is in an offline or disconnected state, the SL DRX configuration is determined by the sending UE. When the sending UE is in a connected state, the SL DRX configuration is determined by the serving cell (such as the base station) of the sending UE, and sent to the sending UE through a RRC message, such that the sending UE forwards the SL DRX configuration to a reception UE. Several embodiments will be given below to describe how to determine the behavior of the user equipment after determining which SL DRX configuration mode to adopt in different situations of the user equipment.

In some embodiments of the present disclosure, received assistance information sent by a peer user equipment is reported in response to the user equipment being in a connected state and adopting the first SL DRX configuration mode.

In an embodiment of the present disclosure, the assistance information may include, but is not limited to, a SL DRX configuration towards the peer user equipment. The SL DRX configuration in an embodiment of the present disclosure may include, but is not limited to, a DRX cycle, an offset, a timer duration, etc.

For example, assuming that the user equipment is the sending UE and the peer user equipment is the reception UE, when the sending UE is in the connected state, if the serving cell supports the Sidelink DRX mechanism, that is, the serving cell message received by the sending UE carries the SL DRX indicator, it is determined to adopt the first SL DRX configuration mode, then the sending UE reports the received assistance information sent by the reception UE to the serving cell, and the assistance information includes a suggested SL DRX configuration (e.g., the SL DRX configuration towards the reception UE). The serving cell may determine the SL DRX configuration according to the assistance information, and send the SL DRX configuration determined by the serving cell to the sending UE through the RRC message. The sending UE forwards the SL DRX configuration determined by the serving cell to the reception UE, such that the sidelink communication between user equipments may be guaranteed.

In some embodiments of the present disclosure, a received SL DRX configuration sent by a peer user equipment is reported in response to the user equipment being in a connected state and adopting the first SL DRX configuration mode, and accepting the received SL DRX configuration sent by the peer user equipment.

For example, assume that the user equipment is a reception UE, and the peer user equipment is a sending UE. When the reception UE is in the connected state, if the serving cell supports the Sidelink DRX mechanism, that is, the serving cell message received by the reception UE carries the SL DRX indicator, in a case that the reception UE accepts the received SL DRX configuration sent by the sending UE, the reception UE reports the received SL DRX configuration (such as the DRX cycle, the offset, the timer duration, etc.) sent by the sending UE, that is, the reception UE reports the received SL DRX configuration sent by the sending UE to the serving cell. The serving cell may adjust Uu DRX such that the SL DRX and the Uu DRX overlap as much as possible to achieve a purpose of saving power.

In some embodiments of the present disclosure, received assistance information and/or SL DRX configuration sent by a peer user equipment are not reported in response to the user equipment being in a connected state and adopting the second SL DRX configuration mode.

For example, assuming that the user equipment is a reception UE and the peer user equipment is a sending UE, when the reception UE is in the connected state, if the serving cell does not support the Sidelink DRX mechanism, that is, the serving cell message received by the reception UE does not carry the SL DRX indicator , the behavior of the reception UE may be not reporting the received SL DRX configuration sent by the sending UE, that is, the reception UE may not report the SL DRX configuration sent by the sending UE to the serving cell when receiving the SL DRX configuration sent by the sending UE.

As another example, assuming that the user equipment is the sending UE, and the peer user equipment is the reception UE. When the sending UE is in the connected state, if the serving cell does not support the Sidelink DRX mechanism, that is, the serving cell message received by the sending UE does not carry the SL DRX indicator, the behavior of the sending UE may be that the assistance information sent by the reception UE does not report to the serving cell when receiving the assistance information sent by the reception UE.

In some embodiments of the present disclosure, SL DRX configuration is not sent to a peer user equipment in response to the user equipment being in a connected state and adopting the second SL DRX configuration mode, and a Sidelink transmission mode between the user equipment and the peer user equipment being unicast.

For example, assuming that the user equipment is a sending UE and the peer user equipment is a reception UE, when the sending UE is in the connected state, if the serving cell does not support the Sidelink DRX mechanism, that is, the serving cell message received by the sending UE does not carry the SL DRX indicator, and the Sidelink transmission mode between the sending UE and the reception UE is unicast, then the behavior of the sending UE may be that: the sending UE does not send the SL DRX configuration to the reception UE.

In some embodiments of the present disclosure, the SL DRX configuration is determined, and the determined SL DRX configuration is sent to a peer user equipment, in response to the user equipment being in a connected state and adopting the second SL DRX configuration mode, and a Sidelink transmission mode between the user equipment and the peer user equipment being unicast, and a sending resource of the user equipment adopting a self-selection mode.

For example, assuming that the user equipment is a sending UE and the peer user equipment is a reception UE, when the sending UE is in the connected state, if the serving cell does not support the Sidelink DRX mechanism, that is, the serving cell message received by the sending UE does not carry the SL DRX indicator, for a unicast transmission mode, when a sending resource of the sending UE adopts a self-selection mode, that is, the sending UE can randomly select the sending resource on its own from a resource pool broadcast by the network or a pre-configured resource pool, the sending UE may determine the SL DRX configuration, and send the SL DRX configuration to the reception UE. Therefore, sidelink communication between user equipments may be guaranteed.

In some embodiments of the present disclosure, SL DRX configuration is not sent to a peer user equipment in response to the user equipment being in a connected state and adopting the second SL DRX configuration mode, and a Sidelink transmission mode between the user equipment and the peer user equipment being unicast, and a sending resource of the user equipment adopting a dynamic scheduling mode.

For example, assuming that the user equipment is a sending UE and the peer user equipment is a reception UE, when the sending UE is in the connected state, if the serving cell does not support the Sidelink DRX mechanism, that is, the serving cell message received by the sending UE does not carry the SL DRX indicator, for a unicast transmission mode, when a sending resource of the sending UE adopts a dynamic scheduling mode, since the dynamic scheduling is that the serving cell dynamically allocates the sending resource on the sidelink to the sending UE according to cache data report of the sending UE, and the serving cell does not support the Sidelink DRX mechanism, the sending UE does not send the SL DRX configuration to the reception UE.

In some embodiments of the present disclosure, the SL DRX configuration is determined and the SL DRX configuration is sent to a peer user equipment in response to the user equipment being in an idle or inactive state, and adopting the second SL DRX configuration mode, and a Sidelink transmission mode between the user equipment and the peer user equipment being unicast.

For example, assuming that the user equipment is a sending UE and the peer user equipment is a reception UE, when the sending UE is in the idle state or inactive state, if the serving cell does not support the Sidelink DRX mechanism, that is, the serving cell message received by the sending UE does not carry the SL DRX indicator, for a unicast transmission mode, the behavior of the sending UE may be that: the sending UE determines the SL DRX configuration, and sends the SL DRX configuration to the reception UE. Therefore, sidelink communication between user equipments may be guaranteed.

In some embodiments of the present disclosure, SL DRX configuration is not sent to a peer user equipment in response to the user equipment being in an idle or inactive state, and adopting the second SL DRX configuration mode, and a Sidelink transmission mode between the user equipment and the peer user equipment being unicast.

For example, assuming that the user equipment is a sending UE and the peer user equipment is a reception UE, when the sending UE is in the idle state or inactive state, if the serving cell does not support the Sidelink DRX mechanism, that is, the serving cell message received by the sending UE does not carry the SL DRX indication, for a unicast transmission mode, the behavior of the sending UE may be that: the SL DRX configuration is not sent to the reception UE.

In some embodiments of the present disclosure, configured unicast SL DRX is released in response to the user equipment being in an idle or inactive state, and moving from a serving cell adopting the first SL DRX configuration mode to a serving cell adopting the second SL DRX configuration mode, and having been configured with the unicast SL DRX.

In an embodiment of the present disclosure, the moving may include any one of cell selection, cell reselection, connection re-establishment and handover, and the like.

For example, when the user equipment is in the idle or inactive state, if the user equipment moves from a serving cell that supports the sidelink DRX to a serving cell that does not support the sidelink DRX, that is, moving from a serving cell that adopts the first SL DRX configuration mode to a serving cell that adopts the second SL DRX configuration mode, for a unicast connected user equipment that has been configured with SL DRX, the user equipment can release the configured unicast SL DRX. Therefore, sidelink communication between the user equipment and the peer user equipment may be guaranteed.

In some embodiments of the present disclosure, configured unicast SL DRX is released in response to the user equipment moving from an offline state to a serving cell adopting the second SL DRX configuration mode, and having been configured with the unicast SL DRX.

For example, when the user equipment moves from the offline state to a cell that does not support the sidelink DRX, that is, moves from the offline state to a serving cell that adopts the second SL DRX configuration mode, for a unicast connection user equipment that has been configured with the SL DRX, the user equipment can release the configured unicast SL DRX. Therefore, sidelink communication between the user equipment and the peer user equipment may be guaranteed.

In some embodiments of the present disclosure, a received SL DRX configuration is rejected, and a rejection indicator is sent to a peer user equipment in response to adopting the second SL DRX configuration mode, and a Sidelink transmission mode between the user equipment and the peer user equipment being unicast.

For example, the user equipment is the receiving UE, and the peer user equipment is the sending UE. When the serving cell does not support the Sidelink DRX mechanism, that is, the serving cell message received by the receiving UE does not carry the SL DRX indicator, and the Sidelink transmission mode between the reception UE and the sending UE is unicast, the reception UE rejects the received SL DRX configuration and sends the rejection indicator to the sending UE.

In some embodiments of the present disclosure, acceptance or rejection of a received SL DRX configuration is determined, and an acceptance indicator or a rejection indicator is sent to a peer user equipment in response to adopting the second SL DRX configuration mode, and a Sidelink transmission mode between the user equipment and the peer user equipment being unicast.

For example, the user equipment is a reception UE, and the peer user equipment is a sending UE. When the serving cell does not support the Sidelink DRX mechanism, that is, the serving cell message received by the receiving UE does not carry the SL DRX indicator, and he Sidelink transmission mode between the reception UE and the sending UE is unicast, the reception UE determines to accept or reject the received SL DRX configuration on its own, and sends the acceptance indicator or the rejection indicator to the sending UE. For example, the reception UE determines to accept the received SL DRX configuration on its own, and the reception UE sends the acceptance indicator to the sending UE. As another example, the reception UE determines to reject the received SL DRX configuration on its own, and sends the rejection indicator to the sending UE.

In some embodiments of the present disclosure, a pre-configured SL DRX configuration is adopted in response to adopting the second SL DRX configuration mode, and a Sidelink transmission mode between the user equipment and a peer user equipment being broadcast or multicast.

For example, when the serving cell does not support the Sidelink DRX mechanism, that is, the serving cell message received by the user equipment does not carry the SL DRX indicator, it is required to adopt the second SL DRX configuration mode, and the Sidelink transmission mode between the user equipment and the peer user equipment is broadcast or multicast, and the user equipment may use the pre-configured SL DRX configuration.

In some embodiments of the present disclosure, SL DRX is not used in response to adopting the second SL DRX configuration mode and a Sidelink transmission mode between the user equipment and a peer user equipment being broadcast or multicast. In an embodiment of the present disclosure, the not using SL DRX includes a DRX function being not started during receiving Sidelink transmission.

For example, when the serving cell does not support the Sidelink DRX mechanism, that is, the serving cell message received by the user equipment does not carry the SL DRX indicator, and the Sidelink transmission mode between the user equipment and the peer user equipment is broadcast or multicast, the user equipment may use SL DRX, for example, the DRX function may not be activated when receiving the Sidelink transmission.

It can be seen that, in an embodiment of the present disclosure, by determining which SL DRX configuration mode to adopt according to the serving cell message, the behavior of the user equipment supporting the Sidelink DRX may be determined. Therefore, sidelink communication between user equipments can be guaranteed, and a device power consumption of the user equipment during the sidelink communication may also be saved, and waste of resources may be avoided.

It can be understood that the foregoing embodiment describes an implementation of the method for determining the sidelink discontinuous reception configuration in an embodiment of the present disclosure from the user equipment side. An embodiment of the present disclosure also proposes a method for determining a sidelink discontinuous reception configuration, and an implementation of the method for determining the sidelink discontinuous reception configuration will be described below from the serving cell device side. Please refer to FIG. 4, which is a flowchart of another method for determining a sidelink discontinuous reception configuration provided by an embodiment of the present disclosure. It should be noted that the method for determining the sidelink discontinuous reception configuration in an embodiment of the present disclosure may be performed by a serving cell device.

It should also be noted that the serving cell device in an embodiment of the present disclosure is a network device. The network device is an entity for transmitting or receiving a signal at a network side. For example, the network device may be an evolved NodeB (eNB), a transmission reception point (TRP), a next generation NodeB (gNB) in a NR system, a base station in other future mobile communication systems, or an access node in a wireless fidelity (WiFi) system. A specific technology and a specific device form adopted by the network device are not limited in embodiments of the present disclosure. The network device according to embodiments of the present disclosure may consist of a central unit (CU) and a distributed unit (DU). The CU may also be referred to as a control unit, and a network device such as a protocol layer of a base station, may be split by using a structure of the CU-DU, functions of a part of the protocol layer are placed in the CU for centralized control, and functions of a remaining part or all of the protocol layer are distributed in the DU, and the DU is centrally controlled by the CU.

As illustrated in FIG. 4, the method for determining the sidelink discontinuous reception configuration may include, but is not limited to, following step.

At step 401, a serving cell message is sent to a user equipment.

In an embodiment of the present disclosure, an SL DRX indicator is present in the serving cell message, or an SL DRX indicator is absent in the serving cell message. In an implementation, the SL DRX indicator being absent in the serving cell message includes that: a serving cell does not provide system information carrying SL DRX configuration; or SL DRX configuration is absent in system information carrying sidelink configuration and sent by the serving cell.

In an embodiment of the present disclosure, the SL DRX indicator includes any one of following items 1) to 3):
1) an indicator of the SL DRX configuration for broadcast and multicast;
2) an indicator of configuration for SL DRX; or
3) an indicator of supporting a Sidelink DRX mechanism.

For example, whether the serving cell supports the SL DRX configuration or not may be determined according to whether the serving cell message sent by the serving cell carries the SL DRX indicator. For example, taking the SL DRX indicator being the indication of the SL DRX configuration for broadcast and multicast as an example, the serving cell message sent by the serving cell carries the indication of the SL DRX configuration for broadcast and multicast, it may be determined that the serving cell supports the SL DRX configuration. The serving cell message sent by the serving cell does not carry the indication of the SL DRX configuration for broadcast and multicast, it may be determined that the serving cell does not support the SL DRX configuration. As another example, taking the SL DRX indicator being the indicator for SL DRX configuration as an example, if the message sent by the serving cell carries the indication of the configuration for SL DRX, it may be determined that the serving cell supports the SL DRX configuration. The message sent by the serving cell does not carry the indication of the configuration for SL DRX, it may be determined that the serving cell does not support the SL DRX configuration. For another example, taking the SL DRX indicator being the indicator of supporting the Sidelink DRX mechanism as an example, the message sent by the serving cell carries the indication of supporting the Sidelink DRX mechanism, it may be determined that the serving cell supports the SL DRX configuration. The message sent by the serving cell does not carry the indicator of supporting the Sidelink DRX mechanism, it may be determined that the serving cell does not support the SL DRX configuration. When determining whether the service cell supports or not, the behavior of the user equipment may be determined based on a status of the user equipment and the service cell. The implementation for determining the behavior of the user device may be referred to the implementation of determining the sidelink discontinuous reception configuration described on the user equipment side above, and will not be repeated here.

By implementing an embodiment of the present disclosure, the SL DRX configuration mode may be determined based on the serving cell message sent by the serving cell, and then the behavior of the user equipment may be determined based on the SL DRX configuration mode. Therefore, sidelink communication between user equipments can be guaranteed, and a device power consumption of the user equipment during the sidelink communication may also be saved, and waste of resources may be avoided.

In embodiments provided in the present disclosure, methods provided in embodiments of the present disclosure are introduced from the perspective of the user equipment and the serving cell device. To achieve various functions in the methods provided in embodiments of the present disclosure, the user equipment and the serving cell device may include a hardware structure and a software module, to achieve the above functions in the form of the hardware structure, the software module or a combination of the hardware structure and the software module. A certain function in the above functions may be performed by the hardware structure, the software module or a combination of the hardware structure and the software module.

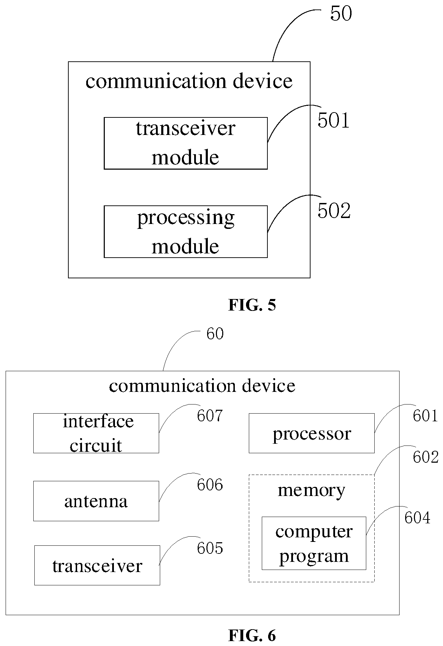

Referring to FIG. 5, FIG. 5 is a structural diagram illustrating a communication device 50 according to embodiments of the present disclosure. The communication device 50 as illustrated in FIG. 5 may include a transceiver module 501 and a processing module 502. The transceiver module 501 may include a sending module and/or a receiving module. The sending module is configured to implement a sending function, the receiving module is configured to implement a receiving function, and the sending module 501 may implement the sending function and/or the receiving function.

The communication device 50 may be a user equipment or an apparatus in the user equipment, or an apparatus capable of being matched and used with the user equipment.

The communication device 50 is the user equipment. In an embodiment of the present disclosure, the processing module 502 is configured to determine a sidelink discontinuous reception (SL DRX) configuration mode in response to a received serving cell message.

In an implementation, the processing module 502 is further configured to: determine to adopt a first SL DRX configuration mode in response to an SL DRX indicator being present in the serving cell message; or determine to adopt a second SL DRX configuration mode in response to an SL DRX indicator being absent in the serving cell message.

In a possible implementation, the SL DRX indicator being absent in the serving cell message includes that: a serving cell does not provide system information carrying SL DRX configuration; or SL DRX configuration is absent in system information carrying sidelink configuration and sent by the serving cell.

In a possible implementation, the SL DRX indicator includes any one of:
an indicator of the SL DRX configuration for broadcast and multicast;
an indicator of configuration for SL DRX; or
an indicator of supporting a Sidelink DRX mechanism.

In an implementation, the transceiver module 501 is configured to report received assistance information sent by a peer user equipment in response to the user equipment being in a connected state and adopting the first SL DRX configuration mode.

In an implementation, the transceiver module 501 is further configured to: report a received SL DRX configuration sent by a peer user equipment in response to the user equipment being in a connected state and adopting the first SL DRX configuration mode, and accepting the received SL DRX configuration sent by the peer user equipment.

In an implementation, the transceiver module 501 is further configured to: not report received assistance information and/or SL DRX configuration sent by a peer user equipment in response to the user equipment being in a connected state and adopting the second SL DRX configuration mode.

In an implementation, the transceiver module 501 is further configured to: not send SL DRX configuration to a peer user equipment in response to the user equipment being in a connected state and adopting the second SL DRX configuration mode, and a Sidelink transmission mode between the user equipment and the peer user equipment being unicast.

In an implementation, the processing module 502 is further configured to determine the SL DRX configuration in response to the user equipment being in a connected state and adopting the second SL DRX configuration mode, and a Sidelink transmission mode between the user equipment and a peer user equipment being unicast, and a sending resource of the user equipment adopting a self-selection mode; and the transceiver module 501 is further configured to send the SL DRX configuration to the peer user equipment.

In an implementation, the transceiver module 501 is further configured to: not send SL DRX configuration to a peer user equipment in response to the user equipment being in a connected state and adopting the second SL DRX configuration mode, and a Sidelink transmission mode between the user equipment and the peer user equipment being unicast, and a sending resource of the user equipment adopting a dynamic scheduling mode.

In an implementation, the processing module 502 is further configured to determine the SL DRX configuration in response to the user equipment being in an idle or inactive state, and adopting the second SL DRX configuration mode, and a Sidelink transmission mode between the user equipment and s peer user equipment being unicast; the transceiver module 501 is further configured to send the SL DRX configuration to the peer user equipment.

In an implementation, the transceiver module 501 is further configured to: not send SL DRX configuration to a peer user equipment in response to the user equipment being in an idle or inactive state, and adopting the second SL DRX configuration mode, and a Sidelink transmission mode between the user equipment and the peer user equipment being unicast.

In an implementation, the processing module 502 is further configured to: release configured unicast SL DRX in response to the user equipment being in an idle or inactive state, and moving from a serving cell adopting the first SL DRX configuration mode to a serving cell adopting the second SL DRX configuration mode, and having been configured with the unicast SL DRX.

In an implementation, the processing module 502 is further configured to: release configured unicast SL DRX in response to the user equipment moving from an offline state to a serving cell adopting the second SL DRX configuration mode, and having been configured with the unicast SL DRX.

In an implementation, the processing module 502 is further configured to reject a received SL DRX configuration in response to adopting the second SL DRX configuration mode, and a Sidelink transmission mode between the user equipment and a peer user equipment being unicast; the transceiver module 501 is further configured to send a rejection indicator to the peer user equipment.

In an implementation, the processing module 502 is further configured to determine acceptance or rejection of a received SL DRX configuration in response to adopting the second SL DRX configuration mode, and a Sidelink transmission mode between the user equipment and a peer user equipment being unicast; the transceiver module 501 is further configured to send an acceptance indicator or a rejection indicator to the peer user equipment.

In an implementation, the processing module 502 is further configured to: adopt a pre-configured SL DRX configuration in response to adopting the second SL DRX configuration mode, and a Sidelink transmission mode between the user equipment and a peer user equipment being broadcast or multicast.

In an implementation, the processing module 502 is further configured to not use SL DRX in response to adopting the second SL DRX configuration mode and a Sidelink transmission mode between the user equipment and a peer user equipment being broadcast or multicast. In some optional implementations, not using SL DRX includes a DRX function being not started during receiving Sidelink transmission.

The communication device 50 is a serving cell device. In an embodiment of the present disclosure, the transceiver module 501 is configured to send a serving cell message to a user equipment, an SL DRX indicator being present in the serving cell message, or an SL DRX indicator being absent in the serving cell message.

The SL DRX indicator being absent in the serving cell message includes that: a serving cell does not provide system information carrying SL DRX configuration; or SL DRX configuration is absent in system information carrying sidelink configuration and sent by the serving cell.

Regarding the apparatus in the foregoing embodiments, a specific manner in which each module executes operations has been described in detail in embodiments related to the method, and will not be described in detail herein.

Referring to FIG. 6, FIG. 6 is a structural diagram illustrating another communication device 60 according to embodiments of the present disclosure. The communication device 60 may be a serving cell device, or may also be a user equipment, or may also be a chip, a system on chip or a processor that supports the serving cell device to implement the method, or a chip, a system on chip or a processor that supports the user equipment to implement the method. The device may be configured to implement the method described in the method embodiments, and may refer to descriptions in the method embodiments.

The communication device 60 may include one or more processors 601. The processor 601 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal device, a terminal device chip, a DU or CU, etc.), to execute a computer program, and process data of the computer program.

Optionally, the communication device 60 may further include one or more memories 602 storing a computer program 604. The processor 601 executes the computer program 604 so that the communication device 60 performs the method as described in the above method embodiments. Optionally, the memory 602 may further store data. The communication device 60 and the memory 602 may be independently configured or integrated together.

Optionally, the communication device 60 may further include a transceiver 605 and an antenna 606. The transceiver 605 may be referred to as a transceiving unit, a transceiver or a transceiving circuit, which may be configured to achieve a transceiving function. The transceiver 605 may include a receiver and a sender. The receiver may be referred to as a receiver device or a receiving circuit, etc., for implementing a receiving function; the sender may be referred to as a sender device or a sending circuit, etc. for implementing a sending function.

Optionally, the communication device 60 may further include one or more interface circuits 607. The interface circuit 607 is configured to receive code instructions and transmit the code instructions to the processor 601. The processor 601 runs the code instructions so that the communication device 60 performs the method according to the above method embodiment.

The communication device 60 is a user equipment: the processor 601 is configured to execute step 101 in FIG. 1; step 201 and step 202 in FIG. 2; and step 301 and step 302 in FIG. 3, etc.

The communication device 60 is a serving cell device: the processor 601 is configured to execute steps 401 in FIG. 4.

In an implementation, the processor 601 may include a transceiver for implementing receiving and transmitting functions. For example, the transceiver may be a transceiving circuit, or an interface, or an interface circuit. The transceiving circuit, the interface or the interface circuit for implementing receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 601 may store a computer program 603. The computer program 603 runs on the processor 601 so that the communication device 60 performs the method as described in the above method embodiments. The computer program 603 may be solidified in the processor 601, in which case the processor 601 may be implemented by a hardware.

In an implementation, the communication device 60 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication device described in the above embodiments may be a network device or a terminal device, but the scope of the communication device described in the present disclosure is not limited thereto, and a structure of the communication device may not be subject to FIG. 6. The communication device may be a stand-alone device or may be a part of a larger device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.; and
(6) others, and so forth.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A system for determining a sidelink discontinuous reception configuration is further provided in embodiments of the disclosure. The system includes a communication device serving as a user equipment in embodiments of FIG. 5 and a communication device serving as a serving cell device, or the system includes a communication device serving as a user equipment and a communication device serving as a serving cell device in embodiments of FIG. 6.

A computer-readable storage medium storing instructions is further provided in the disclosure. When the instructions are executed, functions of the any one method embodiment are implemented.

A computer program product is further provided. The computer program product implements functions of the above any one method embodiment when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication device, and values or representations of the parameters may be other values or representations understandable by the communication device. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method for determining a sidelink discontinuous reception configuration, performed by a user equipment, comprising:
determining a sidelink discontinuous reception (SL DRX) configuration mode in response to a received serving cell message.

2. The method according to claim 1, further comprising:
determining to adopt a first SL DRX configuration mode in response to an SL DRX indicator being present in the serving cell message; or
determining to adopt a second SL DRX configuration mode in response to an SL DRX indicator being absent in the serving cell message.

3. The method according to claim 2, wherein the SL DRX indicator being absent in the serving cell message comprises that:
a serving cell does not provide system information carrying SL DRX configuration; or
SL DRX configuration is absent in system information carrying sidelink configuration and sent by the serving cell.

4. The method according to claim 2 or 3, wherein the SL DRX indicator comprises any one of:
an indicator of the SL DRX configuration for broadcast and multicast;
an indicator of configuration for SL DRX; or
an indicator of supporting a Sidelink DRX mechanism.

5. The method according to claim 2, further comprising:
reporting received assistance information sent by a peer user equipment in response to the user equipment being in a connected state and adopting the first SL DRX configuration mode.

6. The method according to claim 2, further comprising:
reporting a received SL DRX configuration sent by a peer user equipment in response to the user equipment being in a connected state and adopting the first SL DRX configuration mode, and accepting the received SL DRX configuration sent by the peer user equipment.

7. The method according to claim 2, further comprising:
not reporting received assistance information and/or SL DRX configuration sent by a peer user equipment in response to the user equipment being in a connected state and adopting the second SL DRX configuration mode.

8. The method according to claim 2, further comprising:
not sending SL DRX configuration to a peer user equipment in response to the user equipment being in a connected state and adopting the second SL DRX configuration mode, and a Sidelink transmission mode between the user equipment and the peer user equipment being unicast.

9. The method according to claim 2, further comprising:
determining the SL DRX configuration and sending the SL DRX configuration to a peer user equipment in response to the user equipment being in a connected state and adopting the second SL DRX configuration mode, and a Sidelink transmission mode between the user equipment and the peer user equipment being unicast, and a sending resource of the user equipment adopting a self-selection mode.

10. The method according to claim 2, further comprising:
not sending SL DRX configuration to a peer user equipment in response to the user equipment being in a connected state and adopting the second SL DRX configuration mode, and a Sidelink transmission mode between the user equipment and the peer user equipment being unicast, and a sending resource of the user equipment adopting a dynamic scheduling mode.

11. The method according to claim 2, further comprising:
determining the SL DRX configuration and sending the SL DRX configuration to a peer user equipment in response to the user equipment being in an idle or inactive state, and adopting the second SL DRX configuration mode, and a Sidelink transmission mode between the user equipment and the peer user equipment being unicast.

12. The method according to claim 2, further comprising:
not sending SL DRX configuration to a peer user equipment in response to the user equipment being in an idle or inactive state, and adopting the second SL DRX configuration mode, and a Sidelink transmission mode between the user equipment and the peer user equipment being unicast.

13. The method according to claim 2, further comprising:
releasing configured unicast SL DRX in response to the user equipment being in an idle or inactive state, and moving from a serving cell adopting the first SL DRX configuration mode to a serving cell adopting the second SL DRX configuration mode, and having been configured with the unicast SL DRX.

14. The method according to claim 2, further comprising:
releasing configured unicast SL DRX in response to the user equipment moving from an offline state to a serving cell adopting the second SL DRX configuration mode, and having been configured with the unicast SL DRX.

15. The method according to claim 2, further comprising:
rejecting a received SL DRX configuration, and sending a rejection indicator to a peer user equipment in response to adopting the second SL DRX configuration mode, and a Sidelink transmission mode between the user equipment and the peer user equipment being unicast.

16. The method according to claim 2, further comprising:
determining acceptance or rejection of a received SL DRX configuration, and sending an acceptance indicator or a rejection indicator to a peer user equipment in response to adopting the second SL DRX configuration mode, and a Sidelink transmission mode between the user equipment and the peer user equipment being unicast.

17. The method according to claim 2, further comprising:
adopting a pre-configured SL DRX configuration in response to adopting the second SL DRX configuration mode, and a Sidelink transmission mode between the user equipment and a peer user equipment being broadcast or multicast.

18. The method according to claim 2, further comprising:
not using SL DRX in response to adopting the second SL DRX configuration mode and a Sidelink transmission mode between the user equipment and a peer user equipment being broadcast or multicast.

19. The method according to claim 18, wherein not using SL DRX comprises a DRX function being not started during receiving Sidelink transmission.

20. A method for determining a sidelink discontinuous reception configuration, performed by a serving cell device, comprising:
sending a serving cell message to a user equipment, an SL DRX indicator being present in the serving cell message, or an SL DRX indicator being absent in the serving cell message;
wherein the SL DRX indicator being absent in the serving cell message comprises that:
a serving cell does not provide system information carrying SL DRX configuration; or
SL DRX configuration is absent in system information carrying sidelink configuration and sent by the serving cell.

21. A communication device, comprising:
a processing module, configured to determine a sidelink discontinuous reception (SL DRX) configuration mode in response to a received serving cell message.

22. The device according to claim 1, wherein the processing module is further configured to:
determine to adopt a first SL DRX configuration mode in response to an SL DRX indicator being present in the serving cell message; or
determine to adopt a second SL DRX configuration mode in response to an SL DRX indicator being absent in the serving cell message.

23. The device according to claim 22, wherein the SL DRX indicator being absent in the serving cell message comprises that:
a serving cell does not provide system information carrying SL DRX configuration; or
SL DRX configuration is absent in system information carrying sidelink configuration and sent by the serving cell.

24. The device according to claim 22 or 23, wherein the SL DRX indicator comprises any one of:
an indicator of the SL DRX configuration for broadcast and multicast;
an indicator of configuration for SL DRX; or
an indicator of supporting a Sidelink DRX mechanism.

25. The device according to claim 22, further comprising:
a transceiver module, configured to report received assistance information sent by a peer user equipment in response to the user equipment being in a connected state and adopting the first SL DRX configuration mode.

26. The device according to claim 25, wherein the transceiver module is further configured to:
report a received SL DRX configuration sent by a peer user equipment in response to the user equipment being in a connected state and adopting the first SL DRX configuration mode, and accepting the received SL DRX configuration sent by the peer user equipment.

27. The device according to claim 25, wherein the transceiver module is further configured to:
not report received assistance information and/or SL DRX configuration sent by a peer user equipment in response to the user equipment being in a connected state and adopting the second SL DRX configuration mode.

28. The device according to claim 25, wherein the transceiver module is further configured to:
not send SL DRX configuration to a peer user equipment in response to the user equipment being in a connected state and adopting the second SL DRX configuration mode, and a Sidelink transmission mode between the user equipment and the peer user equipment being unicast.

29. The device according to claim 25, wherein
the processing module is further configured to determine the SL DRX configuration in response to the user equipment being in a connected state and adopting the second SL DRX configuration mode, and a Sidelink transmission mode between the user equipment and a peer user equipment being unicast, and a sending resource of the user equipment adopting a self-selection mode; and
the transceiver module is further configured to send the SL DRX configuration to the peer user equipment.

30. The device according to claim 25, wherein the transceiver module is further configured to:
not send SL DRX configuration to a peer user equipment in response to the user equipment being in a connected state and adopting the second SL DRX configuration mode, and a Sidelink transmission mode between the user equipment and the peer user equipment being unicast, and a sending resource of the user equipment adopting a dynamic scheduling mode.

31. The device according to claim 25, wherein
the processing module is further configured to determine the SL DRX configuration in response to the user equipment being in an idle or inactive state, and adopting the second SL DRX configuration mode, and a Sidelink transmission mode between the user equipment and s peer user equipment being unicast;
the transceiver module is further configured to send the SL DRX configuration to the peer user equipment.

32. The device according to claim 25, wherein the transceiver module is further configured to:
not send SL DRX configuration to a peer user equipment in response to the user equipment being in an idle or inactive state, and adopting the second SL DRX configuration mode, and a Sidelink transmission mode between the user equipment and the peer user equipment being unicast.

33. The device according to claim 25, wherein the processing module is further configured to:
release configured unicast SL DRX in response to the user equipment being in an idle or inactive state, and moving from a serving cell adopting the first SL DRX configuration mode to a serving cell adopting the second SL DRX configuration mode, and having been configured with the unicast SL DRX.

34. The device according to claim 25, wherein the processing module is further configured to:
release configured unicast SL DRX in response to the user equipment moving from an offline state to a serving cell adopting the second SL DRX configuration mode, and having been configured with the unicast SL DRX.

35. The device according to claim 25, wherein
the processing module is further configured to reject a received SL DRX configuration in response to adopting the second SL DRX configuration mode, and a Sidelink transmission mode between the user equipment and a peer user equipment being unicast;
the transceiver module is further configured to send a rejection indicator to the peer user equipment.

36. The device according to claim 25, wherein
the processing module is further configured to determine acceptance or rejection of a received SL DRX configuration in response to adopting the second SL DRX configuration mode, and a Sidelink transmission mode between the user equipment and a peer user equipment being unicast;
the transceiver module is further configured to send an acceptance indicator or a rejection indicator to the peer user equipment.

37. The device according to claim 25, wherein the processing module is further configured to:
adopt a pre-configured SL DRX configuration in response to adopting the second SL DRX configuration mode, and a Sidelink transmission mode between the user equipment and a peer user equipment being broadcast or multicast.

38. The device according to claim 25, wherein the processing module is further configured to:
not use SL DRX in response to adopting the second SL DRX configuration mode and a Sidelink transmission mode between the user equipment and a peer user equipment being broadcast or multicast.

39. The device according to claim 38, wherein not using SL DRX comprises a DRX function being not started during receiving Sidelink transmission.

40. A communication device, comprising:
a transceiver module, configured to send a serving cell message to a user equipment, an SL DRX indicator being present in the serving cell message, or no SL DRX indicator being carried in the serving cell message;
wherein no SL DRX indicator being carried in the serving cell message comprises that:
a serving cell does not provide system information carrying SL DRX configuration; or
SL DRX configuration is absent in system information carrying sidelink configuration and sent by the serving cell.

41. A communication device, comprising a processor and a memory storing a computer program, wherein the processor is configured to execute the computer program stored on the memory, causing the device to perform the method according to any one of claims 1 to 19.

42. A communication device, comprising a processor and a memory storing a computer program, wherein the processor is configured to execute the computer program stored on the memory, causing the device to perform the method according to claim 20.

43. A computer-readable storage medium storing instructions, wherein when the instructions are executed, the method according to any one of claims 1 to 19 is implemented.

44. A computer-readable storage medium storing instructions, wherein when the instructions are executed, the method according to claim 20 is implemented.
